# EUROPEAN PATENT SPECIFICATION

(11) **EP 2 213 438 B1**
(45) Date of publication and mention of the grant of the patent: **11.01.2017**
(21) Application number: 09001293.1
(22) Date of filing: 30.01.2009
(51) Int. Cl.: B29C 43/18, B29C 70/68, B65D 1/34

(54) **Tray with an RFID tag, manufacturing method therefor and system**
Schale mit einem RFID-Etikett, Herstellungsverfahren dafür und System
Plateau avec une étiquette RFID, son procédé de fabrication et système

(43) Date of publication of application: 04.08.2010
(73) Proprietor: Presswerk Köngen GmbH, 73240 Wendlingen (DE)
(72) Inventor: Brattoli, Pietro, 72654 Neckartenslingen (DE)
(74) Representative: Latscha Schöllhorn Partner AG

(56) References cited:
- EP-A- 1 419 977
- EP-A- 1 806 219
- DE-A1- 19 854 986
- FR-A- 2 798 362
- US-A1- 2002 188 259

## Description

### FIELD OF THE INVENTION

The present invention is directed to a method of manufacturing a tray with an RFID tag and to a respective tray as well as to a system with a holder for such tray. The tag is integrated by molding and is preferably implemented for bearing data being related to the tray or the content supported by the tray.

### BACKGROUND OF THE INVENTION

A tray is generally considered to be a shallow platform designed for carrying things. It can be fashioned from numerous materials, including silver, glass, sheet iron, wood, melamine, paper-mache, plastics, fibre glass or stainless steel. They may have galleries, handles, and/or short feet for support. Trays are flat, but can also be provided with waist edges to stop things from sliding off. They can be made in a range of shapes but are commonly found in rectangular, round, oval or generally triangular form and are sometimes provided with cut-outs or attached handles.

Radio frequency identification (RFID) is generally an automatic identification system, relying on storing and remotely retrieving data using devices called RFID tags or transponders. The technology requires some extent of cooperation of an RFID reader and the RFID tag. An RFID tag is an object that can be applied to or incorporated into a product, animal or person for the purpose of identification and tracking using radio waves. Some tags can be read from several centimeters or meters away and even beyond the line of sight of the reader. Most RFID tags contain at least two parts. One is an integrated circuit for storing and possessing information, modulating and demodulating a radio frequency (RF) signal, and other specialized functions. The second is an antenna for receiving and transmitting the signal. There are generally two types of RFID tags: active RFID tags, which contain a battery, and passive RFID tags, which contain no battery.

RFID tags can also be implemented in trays in order to store data which may be relevant for the tray itself, such as the estimated remaining lifetime, the condition, such as washed or unwashed, the material, the shape, etc. and/or also information regarding the goods, things, and/or food supported by the tray. The latter type of information can be used, for example, in hospitals in order to identify the nature of the food, such as low calorie food, low fat food, kosher food, anti-allergical food etc.

Consequently, attempts have been made to implement RFID tags into trays. An example is EP 1806219 A1. This document is directed to the production of a servicing tray for transporting crockery, foods and drugs, and comprises the steps of applying RFID tags on a first thermo active sheet, covering the first sheet carrying the RFID tag with a second thermo active sheet which is preferably preformed, and molding the sheets under a pressure of 25 to 100 kg/cm² and a temperature of 90° to 200°C at 30 seconds to 5 minutes. The RFID tags are thus coated by thermosetting material. The first/second sheet consists of a protection film for the RFID tag. The mold is manually or mechanically filled. The sheets are made of thermo setting material of pre impregnated sheet molding compound or premixed bulk molding compound. Later it can be coated with melamine or polyester.

JP 2002-347944 A is directed to a delivery service system which is intended to avoid erroneous delivery. A tray is attached with an RFID tag capable of reading/writing information including information capable of catering foods, an order receipt control part preparing receipt information based on an order, a catering information control part preparing and controlling delivering information including delivery destinations of trays delivered by a delivery vehicle based on order reception information and catering/loading information including catering data commanding the food items to be put on the respective trays and tray loading data commanding a loading process of the trays onto a delivery vehicle corresponding to the delivery order based on the order receipt information. An output part is provided for writing the delivery information in the RFID tag and a portable terminal device for displaying the catering information and the delivery information.

It is the object of the present invention to provide an improved tray comprising an RFID tag and an improved method for manufacturing the same and a system with a holder for such tray.

This object is attained by the method according to claim 1, the tray according to claim 13 and the system according to claim 15. Preferred embodiments are disclosed in the dependent claims.

### SUMMARY OF THE INVENTION

The invention is directed to a method of manufacturing a tray comprising at least one or more RFID tag(s). The RFID tag can be an active or passive tag. At least one or more RFID unit(s) is/are formed by covering the RFID tag(s) with a first material which is at least after the forming essentially thermally inactive at a molding temperature. The molding temperature is intended to mean the temperature at which all components to form the final tray are heated and pressed. The first material covering the RFID tag is selected to be thermally inactive at the molding temperature even before covering the RFID tag or only after covering the RFID tag, for example, when after having cured. The RFID unit formed by the RFID tag covered by the first material is positioned at or onto a second material which is cured by heat and is fibre reinforced and which at least tends to float during molding. This second material is preferably the main bulk material for forming the final tray. This second material has a clear tendency to flow during molding. The RFID unit is covered either simultaneously with the previous step or after the previous set with a cover material to form a stack. In other words, the stack is preferably formed by the lower most second material, than on top the RFID unit which is further covered on top by the cover material. The cover material is thermally inactive at the molding temperature as well. The stack is then pressed and heated at the molding temperature to form the tray. These steps can be performed at the order mentioned above or the forming of the RFID unit can be simultaneously performed together with the positioning of the RFID unit at or onto a second material and/or this positioning of the RFID unit at or onto the second material can be simultaneously performed with the covering of the RFID unit with the cover material.

It is the advantage of the present invention to allow a more precise positioning of the RFID tag into or onto the tray. As will be explained further below in more detail, the second material or bulk material for the tray has the clear tendency to flow during the pressing and heating step, mainly perpendicularly to the pressing direction. By providing the first material and the cover material thermally inactive at the molding temperature, an adhesion between the RFID unit and/or the cover material to the second material having the tendency to flow is avoided or minimized. Thus, any kind of move during the pressing and heating step or molding step perpendicularly to the pressing direction is avoided or at least minimized.

The first material can comprise or can even entirely consist of a thermo set material.

The second material is placed in a mold, further preferably on top of the lower mold, then on top of the second material the RFID unit is placed and afterwards the cover material is placed onto the RFID unit before molding this stack. As already mentioned above, the RFID unit and the cover material can also be simultaneously or together applied onto the second material or bulk material.

The first material is preferably applied in the form of two sheets with the RFID tag enclosed in between the two sheets. Also one continuous sheet could be used folded with the RFID unit in between the two sections separated by the following line which are then laminated onto each other. The first material can be a fibre reinforced material such as SMC (sheet molding compound), BMC (bulk molding compound, a polyester based glass reinforced thermo setting polymer), polyester or melamine, and further preferably a paper material impregnated with phenol-and/or melamine. Phenol is also known as carbolic acid, and its chemical formula is generally understood to be C₆H₅OH and its structure is that of a hydroxyl group (-OH) bonded to a phenyl ring. Melamine is an organic base and a trimer of cyanamide with a 1,3,5-triazine skeleton.

The cover material is preferably a fibre-reinforced material, more preferably a glass fibre-reinforced material.

The second material is further preferably a SMC material which before molding is preferably shaped in mat form and further preferably comprises at least two mats positioned one on the other. This provides sufficient thickness or material for the tray, and the tray becomes nevertheless uniformly formed after molding. As mentioned above, the second material flows when being molded, mainly or generally perpendicularly to a pressing direction of the mold by 10 % to 100 % of its original dimension, preferably by 15 to 50 % and more preferably by 20 to 40 %. More preferably, the mold is formed by a lower mold and an upper mold which have a surface imprinting their topography onto the tray components mentioned. The surfaces are generally horizontally oriented, and mostly, the lower mold is fixed in location while the upper mold moves vertically onto the lower mold. The direction of flow of the second material would then be horizontally and generally from the inner portion of both molds to their outer portions.

The cover material preferably has an annealing point of 600°C to 720°C, preferably 620°C to 700°C, more preferably 640°C to 675°C, and a softening point of 750°C to 950°C, preferably 800°C to 900°C, more preferably 815°C to 875°C and most preferably 830°C to 860°C.

Further preferably, the cover material has the same or similar colour and/or texture as the second material in the final or molded form. This is mainly for esthetical reasons in order to avoid a user or spectator to easily localize the position of the RFID tag or RFID unit and in order to provide a more uniform impression.

More preferably, the molding or pressing tags takes places at pressures between 150 to 250 tons, preferably 180 to 240 tons, most preferably at about 200 tons for the forming of the tray.

The tray can have any shape, such as mentioned before, and preferably has at least one ridge which can be formed entirely across the tray or at least in part across the tray wherein the RFID unit is further preferably positioned in the area of the ridge and more preferably in the apex section of the ridge.

The invention is also directed to a tray which is manufactured according to any of the before or below described method. The tray comprises a tray body, an RFID unit with an RFID tag being embedded by a first material. The RFID unit is arranged onto or extends at least partially into the tray body. A cover material which is covering the RFID unit to the outside of the tray body, wherein the cover material preferably has the same or similar colour and/or texture as the tray body. In a further preferred embodiment the cover material together with the RFID unit are embedded within the tray body so that the respective surfaces are flushing.

The tray further preferably has a generally concave shape with at least one ridge extending at least partially over the tray, the RFID unit being preferably arranged in the area of the ridge. As mentioned before, the tray can have any shape.

The invention is also directed to a system with a holder for a tray which is described before or below and a reader and/or writer for the RFID unit. The reader and/or writer are preferably arranged in the vicinity of the RFID unit when the tray is in or on the holder so as to allow reading and/or writing of the RFID unit. In case of a tray being formed with a ridge with the RFID unit being placed onto or into the apex of the ridge the holder may have a supporting rail for supporting the ridge from below which either carries the reader and/or writer for the RFID unit or a respective reader and/or writer can be placed above this ridge.

### DETAILED DESCRIPTION OF THE INVENTION

Preferred embodiments in accordance with the present invention are exemplified in the Figures. In the Figures, the following is shown:
- Fig. 1: a cross section through an upper and lower mold with the components forming the tray in between in the preformed state;
- Fig. 2: a cross section through an example of a tray formed by the configuration shown in Fig. 1;
- Fig. 3: a detail encircled in Fig. 2 showing an RFID unit and a cover material embedded in a section of the final tray;
- Fig. 4: an upper view onto a tray according to Fig. 2; and
- Fig. 5: a cross section through an RFID tag being embedded in a first material.

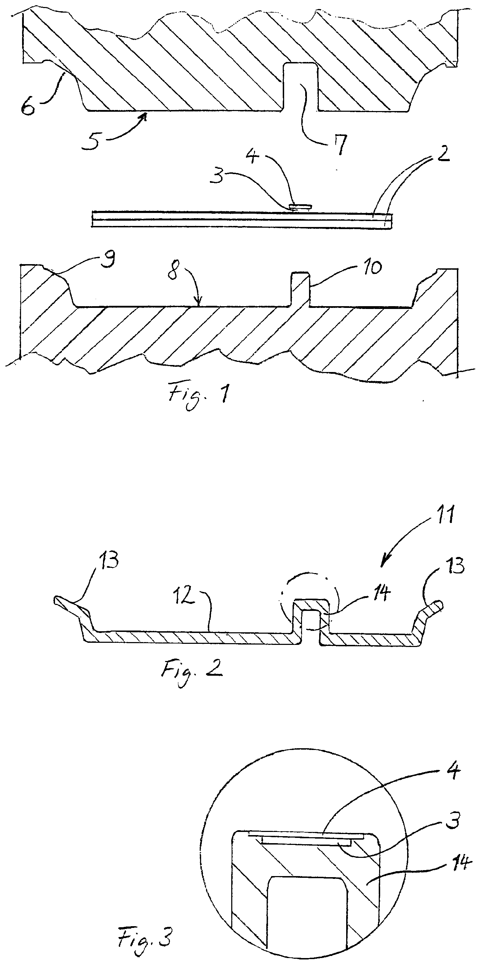

- In Fig. 1: an upper mold 5 is shown in cross section having the topography to be imprinted upon
the tray components. A section 6 and a recess 7 being provided in the topography or lower surface of the upper mold are also specified in this Figure. A lower mold 8 is shown with a corresponding edge section 9 and a protrusion 10 forming the corresponding sections to the upper mold. This Figure is a principle drawing only, any tray shapes, dimensions etc. are just for exemplifying purposes and not limiting. Any inclination of surfaces in molds such as of the extension 10 in the lower mold 8 are not shown.

In between the two molds 5 and 8, the components forming the final tray are shown. A second material which is shown to have two layers of material is provided which constitutes the main component or the bulk material for the tray. On top of the upper layer an RFID unit 3 is shown and on top thereof a cover material 4. It is clear from the arrangement in Fig. 1 that the RFID unit 3 and the cover material 4 are positioned at a location where the recess 7 is provided in the upper mold 5 and the extension 10 is provided in the lower mold 8. The topography and the dimensions of these elements are exaggerated, and the position of the RFID unit 3 and the cover material 4 is just exemplified. In any case, the bulk material or second material 2 tends to flow to the outside of the mold during the molding or pressing and heating step. In the prior art, this would mean that for the example shown the RFID unit 3 and the cover material 4 would at least move with a great risk at least along a ridge to be formed, i.e., along a direction perpendicular to the Figure. However, the present invention has the preferred advantage that this is prevented or minimized so that the location of the RFID unit is of importance in order to later guarantee an exact position to a reader and/or writer for this RFID unit can be determined. The RFID unit could also be located at other locations, for example, at or in a bottom of the tray. In the latter case, this would additionally bear the risk that the RFID unit would further move or flow together with the second material in the plane of the Figure.

Fig. 2 shows a cross section through a tray manufactured in accordance with Fig. 1. The tray 11 has edge sections 13 and a bottom section 12. Additionally, a ridge 14 is formed and caused by the topography of the mold as shown in Fig. 1. In Fig. 2, the dimension of the ridge is exaggerated. Also, the ridge 14 can be placed at other locations or can only extend over the tray 11 partially. Any inclined surfaces are also not shown although they are typically provided in such trays. According to the preferred embodiment, the RFID unit is located in the apex area of ridge 14. However, as mentioned before, it could also be arranged at any other location, such as in the bottom section 12 or side sections 13 of the tray. In Fig. 2 the apex section of the ridge 14 is encircled showing a detail thereof.

In Fig. 3, this apex section of the ridge 14 is enlarged. As can be seen the RFID unit 3 and the cover material 4 are embedded in the apex section. The outer surface of the cover material 4 and the tray are preferably flushing. This is mainly for esthetical and handling reasons. The outer surface of the cover material 4, the entire cover material 4 or even the cover material 4 and the RFID unit 3 may also protrude at least partially or entirely.

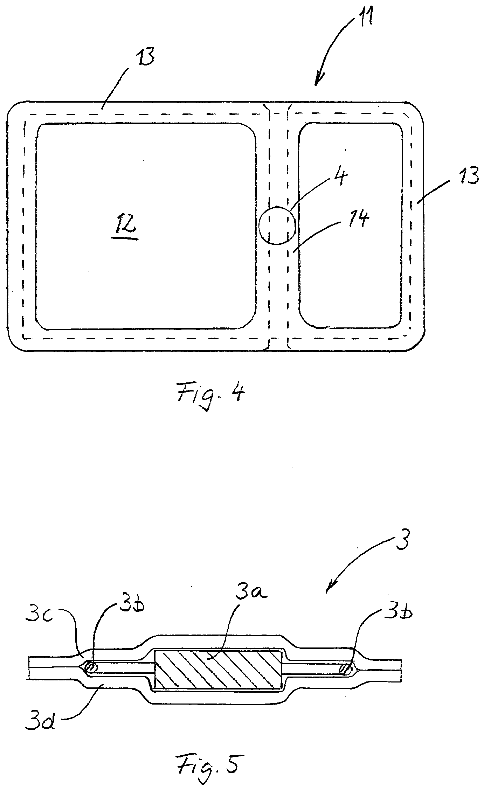

Fig. 4 shows a final tray according to the embodiment of Fig. 2. As can be seen, the bottom section 12 and a continuous side section 13 are shown. Dotted lines exemplify edges on the lower surface of the tray 11. The ridge 14 is also identified and the location of the RFID unit is apparent from the location of the cover material 4. As mentioned before, in practise it is preferred that this location is not or hardly visible by the user's eye. In Fig. 4, the location has just been shown for illustration purposes. If now a tray 11 is introduced into a holder or a system with a holder, a RFID reader and/or writer could be placed in the vicinity or proximity to the RFID unit. Going back to Fig. 2, a supporting rail (not shown) could further support the tray 11 within the lower canal formed by the ridge 14. In this case also a reader or writer could be located in or at this holding rail. The RFID reader or writer could also be located on top of the ridge 14 and on top of the RFID unit and cover material 4.

Fig. 5 shows an example of an RFID unit. An integrated RFID circuit 3 a is provided with an antenna 3b connected to the circuit. These two elements 3a, 3b are embedded by a first material 3c, 3d. In the example shown, two layers 3c and 3d enclose the RFID circuit 3a and the antenna 3b and are attached to each other at their side sections.

The present invention also covers the exact terms, features, values and ranges etc. in cases these terms, features, values and ranges etc. are used in conjunctions with terms such as about, around, generally, substantially, essentially, at least etc. (i.e., "about 3" shall also cover exactly 3 or "essentially radial" shall also cover exactly radial).

## Claims

1. Method of manufacturing a tray (11) with a tray body (12-14) comprising an RFID tag with the following steps:
(a) forming at least one RFID unit (3) by covering the RFID tag (3a,b) with a first material (3c,d) which is at least after the forming essentially thermally inactive at a molding temperature;
(b) positioning the RFID unit (3) at or onto a second material (2) which is heat curable and fibre-reinforced and at least tends to flow during molding;
(c) covering the RFID unit (3) with a cover material (4) to form a stack (2,3,4), the cover material (4) being thermally inactive at the molding temperature;
(d) pressing and heating the stack (2,3,4) at the molding temperature to form the tray (11) with the tray body (12-14), wherein the cover material (4) is covering the RFID unit to the outside of the tray body (12-14) and wherein the RFID unit is arranged onto or extending at least partially into the tray body (12-14).

2. Method according to claim 1, wherein the first material (3c,d) comprises or consists of a thermoset material.

3. Method according to any one of the preceding claims, wherein the second material (2) is placed in a mold (5,8), then on top of the second material (2) the RFID unit (3) and afterwards the cover material (4) before molding the stack (2,3,4) to form the tray (11).

4. Method according to any one of the preceding claims, wherein the first material (3c,d) for covering the RFID tag to form the RFID unit (3) is applied in the form of two sheets (3c.d) with the RFID tag (3a,b) in between.

5. Method according to any one of the preceding claims, wherein the first material (3c,d) is a fibre-reinforced material, such as SMC, BMC, polyester or melamine, and preferably a paper material impregnated with phenol and/or melamine.

6. Method according to any one of the preceding claims, wherein the cover material (4) is a fibre-reinforced material, preferably glass fibre-reinforced material.

7. Method according to any one of the preceding claims, wherein the second material (2) is a SMC material which before molding is preferably shaped in mat form and further preferably comprises at least two mats positioned one on the other.

8. Method according to any one of the preceding claims, wherein the second material (2) when being molded flows perpendicular to a pressing direction of the mold by 10% to 100% of its original dimension, preferably by 15% to 50%, more preferably by 20% to 40%.

9. Method according to any one of the preceding claims, wherein the cover material (4) has an annealing point of 600°C to 720°C, preferably 620°C to 700 °C, more preferably 640°C to 675°C, and/or a softening point of 750°C to 950°C, preferably 800°C to 900°C, more preferably 815°C to 875°C and most preferably 830°C to 860°C.

10. Method according to any one of the preceding claims, wherein the cover material (4) has the same or similar colour and/or texture as the second material (2) in the melded form.

11. Method according to any one of the preceding claims, wherein the pressing takes place at pressures between 150 to 250 tons, preferably 180 to 240 tons, most preferably at about 200 tons.

12. Method according to any one of the preceding claims, wherein the tray (11) is formed with at least one ridge (14) being formed at least in part across the tray, the RFID unit (3) being positioned in the area of the ridge (14).

13. Tray, manufactured according to a method according to any one of the preceding claims, the tray (11) comprising:
(a) a tray body (12-14);
(b) an RFID unit (3) with an RFID tag (3a,b) being embedded by a first material (3c,d) which is at least after forming of the RFID unit essentially thermally inactive at a molding temperature, the RFID unit being arranged onto or extending at least partially into the tray body (12-14);
(c) the RFID unit being positioned at or onto a second material (2) which is heat curable and fibre-reinforced and at least tends to flow during molding; and
(d) a cover material (4) covering the RFID unit to the outside of the tray body (12-14), the cover material (4) being thermally inactive at the molding temperature.

14. Tray according to claim 13, wherein the tray (11) has a generally concave shape with at least one ridge (14) extending at least partially over the tray (11), wherein the RFID unit is arranged in the area of the ridge (14).

15. System with a holder for a tray according to claim 13 or 14 and a reader and/or writer for the RFID unit, the reader and/or writer being arranged in the vicinity of the RFID unit (3) when the tray (11) is in or on the holder so as to allow reading and/or writing of the RFID unit (3).

## Patentansprüche

1. Verfahren zum Herstellen einer Schale (11) mit einem Schalenkörper (12-14), der ein RFID-Etikett aufweist, mit den folgenden Schritten:
(a) Bilden von mindestens einer RFID-Einheit (3) durch Abdecken des RFID-Etiketts (3a, b) mit einem ersten Material (3c,d), das mindestens nach dem Bilden bei einer Formungstemperatur im Wesentlichen thermisch inaktiv ist;
(b) Anordnen der RFID-Einheit (3) an oder auf einem zweiten Material (2), das wärmehärtend und faserverstärkt ist und mindestens dazu neigt, während des Formens zu fließen;
(c) Abdecken der RFID-Einheit (3) mit einem Abdeck-material (4), um einen Stapel (2,3,4) zu bilden, wobei das Abdeckmaterial (4) bei der Formungstemperatur thermisch inaktiv ist;
(d) Pressen und Erwärmen des Stapels (2,3,4) bei der Formungstemperatur, um die Schale (11) mit dem Schalenkörper (12-14) zu bilden, wobei das Abdeck-material (4) die RFID-Einheit am Äußeren des Schalenkörpers (12-14) abdeckt und wobei die RFID-Einheit auf dem Schalenkörper (12-14) angeordnet ist oder sich mindestens teilweise in ihn hinein erstreckt.

2. Verfahren nach Anspruch 1, wobei das erste Material (3c,d) ein Duroplastmaterial aufweist oder daraus besteht.

3. Verfahren nach einem der vorhergehenden Ansprüche, wobei das zweite Material (2) in einer Form (5,8), dann auf dem zweiten Material (2) die RFID-Einheit (3) und danach das Abdeckmaterial (4) vor dem Formen des Stapels (2,3,4) angeordnet wird, um die Schale (11) zu bilden.

4. Verfahren nach einem der vorhergehenden Ansprüche, wobei das erste Material (3c,d) zum Abdecken des RFID-Etiketts, um die RFID-Einheit (3) zu bilden, in der Form von zwei Lagen (3c,d) mit dem RFID-Etikett (3a, b) dazwischen aufgebracht wird.

5. Verfahren nach einem der vorhergehenden Ansprüche, wobei das erste Material (3c,d) ein faserverstärktes Material, wie SMC, BMC, Polyester oder Melamin und vorzugsweise ein Papiermaterial ist, das mit Phenol und/oder Melamin imprägniert ist.

6. Verfahren nach einem der vorhergehenden Ansprüche, wobei das Abdeckmaterial (4) ein faserverstärktes Material, vorzugsweise ein glasfaserverstärktes Material ist.

7. Verfahren nach einem der vorhergehenden Ansprüche, wobei das zweite Material (2) ein SMC-Material ist, das vorzugsweise vor dem Formen in einer Mattenform geformt ist und ferner vorzugsweise mindestens zwei Matten aufweist, die aufeinander angeordnet sind.

8. Verfahren nach einem der vorhergehenden Ansprüche, wobei das zweite Material (2), wenn es geformt wird, senkrecht zu einer Pressrichtung der Form um 10% bis 100% seiner ursprünglichen Abmessung, vorzugsweise um 15% bis 50%, besonders bevorzugt um 20% bis 40% fließt.

9. Verfahren nach einem der vorhergehenden Ansprüche, wobei das Abdeckmaterial (4) eine obere Kühltemperatur von 600°C bis 720°C, vorzugsweise 620°C bis 700°C, besonders bevorzugt 640°C bis 675°C, und/oder eine Erweichungstemperatur von 750°C bis 950°C, vorzugsweise 800°C bis 900°C, besonders bevorzugt 815°C bis 875°C und ganz besonders bevorzugt 830°C bis 860°C aufweist.

10. Verfahren nach einem der vorhergehenden Ansprüche, wobei das Abdeckmaterial (4) in der verschmolzenen Form dieselbe oder eine ähnliche Farbe und/oder Textur wie das zweite Material (2) aufweist.

11. Verfahren nach einem der vorhergehenden Ansprüche, wobei das Pressen bei Drücken zwischen 150 bis 250 Tonnen, vorzugsweise 180 bis 240 Tonnen, ganz besonders bevorzugt bei etwa 200 Tonnen stattfindet.

12. Verfahren nach einem der vorhergehenden Ansprüche, wobei die Schale (11) mit mindestens einem Grat (14) gebildet wird, der mindestens teilweise über die Schale ausgebildet ist, wobei die RFID-Einheit (3) im Bereich des Grats (14) angeordnet wird.

13. Schale, die gemäß einem Verfahren nach einem der vorhergehenden Ansprüche hergestellt ist, wobei die Schale (11) Folgendes umfasst:
(a) einen Schalenkörper (12-14);
(b) eine RFID-Einheit (3) mit einem RFID-Etikett (3a, b), das durch ein erstes Material (3c,d) eingebettet ist, das mindestens nach dem Bilden der RFID-Einheit bei einer Formungstemperatur im Wesentlichen thermisch inaktiv ist, wobei die RFID-Einheit auf dem Schalenkörper (12-14) angeordnet ist oder sich mindestens teilweise in ihn hinein erstreckt;
(c) wobei die RFID-Einheit an oder auf einem zweiten Material (2) angeordnet ist, das wärmehärtend und faserverstärkt ist und mindestens dazu neigt, während des Formens zu fließen; und
(d) ein Abdeckmaterial (4), das die RFID-Einheit am Äußeren des Schalenkörpers (12-14) abdeckt, wobei das Abdeckmaterial (4) bei der Formungstemperatur thermisch inaktiv ist.

14. Schale nach Anspruch 13, wobei die Schale (11) eine im Allgemeinen konkave Form mit mindestens einem Grat (14) aufweist, der sich mindestens teilweise über die Schale (11) erstreckt, wobei die RFID-Einheit im Bereich des Grats (14) angeordnet ist.

15. System mit einem Halter für eine Schale nach Anspruch 13 oder 14 und einem Lesegerät und/oder Schreibgerät für die RFID-Einheit, wobei das Lesegerät und/oder das Schreibgerät in der Nähe der RFID-Einheit (3) angeordnet sind, wenn sich die Schale (11) in oder auf dem Halter befindet, um das Lesen und/oder Schreiben der RFID-Einheit (3) zu ermöglichen.

## Revendications

1. Procédé de fabrication d'un plateau (11) doté d'un corps (12-14) de plateau comportant une étiquette RFID, comprenant les étapes suivantes :
(a) former au moins une unité RFID (3) en recouvrant l'étiquette RFID (3a, b) d'un premier matériau (3c, d) qui est, au moins après la mise en forme, essentiellement thermiquement inactif à une température de moulage ;
(b) positionner l'unité RFID (3) au niveau ou sur un deuxième matériau (2) qui est durcissable à la chaleur et renforcé par des fibres et tend au moins à se fluidifier pendant le moulage ;
(c) recouvrir l'unité RFID (3) d'un matériau (4) de couverture pour former un empilement (2, 3, 4), le matériau (4) de couverture étant thermiquement inactif à la température de moulage ;
(d) presser et chauffer l'empilement (2, 3, 4) à la température de moulage pour former le plateau (11) doté du corps (12-14) de plateau, le matériau (4) de couverture recouvrant l'unité RFID vers l'extérieur du corps (12-14) de plateau et l'unité RFID étant disposée sur ou s'étendant au moins partiellement jusque dans le corps (12-14) de plateau.

2. Procédé selon la revendication 1, le premier matériau (3c, d) comportant ou étant constitué d'un matériau thermodurcissable.

3. Procédé selon l'une quelconque des revendications précédentes, le deuxième matériau (2) étant placé dans un moule (5, 8), suivi, par-dessus le deuxième matériau (2), de l'unité RFID (3) puis du matériau (4) de couverture avant de mouler l'empilement (2, 3, 4) pour former le plateau (11).

4. Procédé selon l'une quelconque des revendications précédentes, le premier matériau (3c, d) destiné à recouvrir l'étiquette RFID pour former l'unité RFID (3) étant appliqué sous la forme de deux feuilles (3c, d), l'étiquette RFID (3a, b) se trouvant entre celles-ci.

5. Procédé selon l'une quelconque des revendications précédentes, le premier matériau (3c, d) étant un matériau renforcé par des fibres, comme du SMC, du BMC, du polyester ou de la mélamine, et de préférence un matériau en papier imprégné de phénol et/ou de mélamine.

6. Procédé selon l'une quelconque des revendications précédentes, le matériau (4) de couverture étant un matériau renforcé par des fibres, de préférence un matériau renforcé par des fibres de verre.

7. Procédé selon l'une quelconque des revendications précédentes, le deuxième matériau (2) étant un matériau en SMC qui, avant moulage, est de préférence façonné sous la forme d'une nappe et comporte en outre de préférence au moins deux nappes positionnées l'une sur l'autre.

8. Procédé selon l'une quelconque des revendications précédentes, le deuxième matériau (2) lorsqu'il est moulé, s'écoulant perpendiculairement à une direction de pressage du moule sur 10% à 100% de sa dimension d'origine, de préférence sur 15% à 50%, de façon plus préférentielle sur 20% à 40%.

9. Procédé selon l'une quelconque des revendications précédentes, le matériau (4) de couverture présentant un point de recuit de 600°C à 720°C, de préférence 620°C à 700 °C, de façon plus préférentielle 640°C à 675°C, et/ou un point de ramollissement de 750°C à 950°C, de préférence 800°C à 900°C, de façon plus préférentielle 815°C à 875°C et idéalement 830°C à 860°C.

10. Procédé selon l'une quelconque des revendications précédentes, le matériau (4) de couverture présentant une couleur et/ou une texture identiques ou similaires à celles du deuxième matériau (2) sous la forme liée.

11. Procédé selon l'une quelconque des revendications précédentes, le pressage ayant lieu à des pressions comprises entre 150 et 250 tonnes, de préférence 180 et 240 tonnes, idéalement à environ 200 tonnes.

12. Procédé selon l'une quelconque des revendications précédentes, le plateau (11) étant formé avec au moins une nervure (14) formée au moins en partie en travers du plateau, l'unité RFID (3) étant positionnée dans la zone de la nervure (14).

13. Plateau, fabriqué suivant un procédé selon l'une quelconque des revendications précédentes, le plateau (11) comportant :
(a) un corps (12-14) de plateau ;
(b) une unité RFID (3) dotée d'une étiquette RFID (3a, b) enrobée par un premier matériau (3c, d) qui est, au moins après la formation de l'unité RFID, essentiellement thermiquement inactif à une température de moulage, l'unité RFID étant disposé sur ou s'étendant au moins partiellement jusque dans le corps (12-14) de plateau ;
(c) l'unité RFID étant positionnée au niveau ou sur un deuxième matériau (2) qui est durcissable à la chaleur et renforcé par des fibres et tend au moins à se fluidifier pendant le moulage ; et
(d) un matériau (4) de couverture recouvrant l'unité RFID vers l'extérieur du corps (12-14) de plateau, le matériau (4) de couverture étant thermiquement inactif à la température de moulage.

14. Plateau selon la revendication 13, le plateau (11) présentant une forme généralement concave avec au moins une nervure (14) s'étendant au moins partiellement sur le plateau (11), l'unité RFID étant disposée dans la zone de la nervure (14).

15. Système doté d'un support pour un plateau selon la revendication 13 ou 14 et d'un moyen de lecture et/ou d'écriture pour l'unité RFID, le moyen de lecture et/ou d'écriture étant disposé au voisinage de l'unité RFID (3) lorsque le plateau (11) se trouve dans ou sur le support de façon à permettre la lecture et/ou l'écriture de l'unité RFID (3).
